# EUROPÄISCHE PATENTANMELDUNG

(11) **EP 3 902 248 A1**
(43) Veröffentlichungstag der Anmeldung: **27.10.2021**
(21) Anmeldenummer: 20170846.8
(22) Anmeldetag: 22.04.2020
(51) Int. Cl.: H04N 7/18, G05D 1/00, H04N 21/234, H04N 21/238, H04W 4/44

(54) **VERFAHREN UND KOMMUNIKATIONSSYSTEM ZUR OPTIMIERUNG DER BILDÜBERTRAGUNG BEI TELEOPERATED DRIVING-ANWENDUNGEN**

(71) Anmelder: Deutsche Telekom AG, 53113 Bonn (DE)
(72) Erfinder: Hetzer, Dirk, 12683 Berlin (DE)
(74) Vertreter: Braun-Dullaeus Pannen Emmerling Patent- & Rechtsanwaltspartnerschaft mbB

(57) **Zusammenfassung**

Bei Teleoperated Driving (ToD)-Anwendungen müssen große Datenmengen (Bilddaten) zeit- und qualitätsoptimiert auf zuverlässige Weise übertragen werden können. Oftmals werden die Bilddaten für diesen Zweck komprimiert. Die vorliegende Erfindung betrifft Verfahren und Anordnungen zur Optimierung der Bildübertragung bei ToD-Anwendungen. Insbesondere betrifft die Erfindung ein Verfahren zur Optimierung der Bildübertragung bei ToD-Anwendungen, bei welchen die Bildübertragung zwischen wenigstens einem Fahrzeug (1) und wenigstens einem entfernten Fahrer (2) oder wenigstens einer vom Fahrer genutzten/nutzbaren Kommunikations-/Steuerungseinheit (2a) oder wenigstens einer ToD-Station (3) über wenigstens einen Kommunikationskanal (6) erfolgt, wobei Bilddaten für die Bildübertragung komprimiert werden. Erfindungsgemäß werden die Bilddaten für die Bildübertragung hinsichtlich vordefinierter/vordefinierbarer Bildinhalte analysiert, wobei eine Selektion von Bildinhalten erfolgt. Hierdurch kann ein gutes Qualitätsniveau bei vermindertem Datenvolumen sichergestellt werden.

## Beschreibung

### ECHNISCHES GEBIET

Die vorliegende Erfindung betrifft ein Verfahren, ein Kommunikationssystem, ein Fahrzeug und eine Steuereinheit zur Optimierung der Bildübertragung bei Teleoperated Driving (ToD)-Anwendungen, insbesondere beim Übertragen von komprimierten Bilddaten zwischen wenigstens einem Fahrzeug und wenigstens einem entfernten Fahrer bzw. wenigstens einer vom Fahrer genutzten/nutzbaren Steuerungseinheit.

Ferner betrifft die vorliegende Erfindung auch ein Computerprogrammprodukt zum Ausführen des Verfahrens auf wenigstens einem Computer. Nicht zuletzt betrifft die vorliegende Erfindung auch die Verwendung wenigstens einer Bildverarbeitungseinheit zur Optimierung der Bildübertragung. Insbesondere betrifft die Erfindung ein Verfahren und eine Anordnung gemäß dem Oberbegriff des jeweiligen unabhängigen Anspruchs.

### HINTERGRUND DER ERFINDUNG

Beim Teleoperated Driving (ToD) müssen sehr große Datenmengen, insbesondere Bilddaten, vom jeweiligen Fahrzeug zum entfernten Fahrer oder einer entfernten Steuereinheit auf zuverlässige Weise übertragen werden können. Da die Bilddaten in hoher Frequenz übertragen werden, können diese auch als Videodaten bezeichnet werden. Die übertragenen Daten werden dann zum "Fernsteuern" des Fahrzeugs genutzt. Die Daten werden insbesondere gemäß den Standardverfahren H.265 oder H.264 übertragen und mit möglichst geringer Verzögerung und hinsichtlich möglichst hoher Dienstgüte bzw. bei gesicherter Quality of Service (QoS) aus dem Fahrzeug über Mobilfunknetze gesendet. Dabei kann jedoch die Fahrfunktion aufgrund kommunikativer Unzulänglichkeiten beeinträchtigt werden. Insbesondere kann es vorkommen, dass aufgrund verminderter Netzqualität (beispielsweise im Zusammenhang mit Durchsatzbeschränkungen zu bestimmten Zeiten oder bei besonderen Lastsituationen in einer jeweiligen Funkzelle oder bei ungünstig gelegenen Empfangspunkten) die Daten nur unvollständig übertragen werden, sodass die Fahrfunktionen lediglich einen minderwertigen Satz von Daten zur Verfügung haben. Eine Beeinträchtigung der Fahrfunktion sollte einerseits hinsichtlich des einzelnen Fahrzeugs, andererseits auch hinsichtlich der Umgebung des Fahrzeugs möglichst vermieden werden; strenggenommen müssen derartige durch kommunikative Unzulänglichkeiten begründete nachteilige Effekte möglichst ausgeschlossen werden können, um ToD-Techniken für möglichst viele Anwendungen unbedenklich freigeben und verwenden zu können.

Insbesondere in Hinblick auf Qualität, Zuverlässigkeit und Netzauslastung besteht Interesse daran, die bisher in der Praxis nach wie vor auftretenden Qualitätseinbußen und Beeinträchtigungen weiter zu vermindern bzw. möglichst vollständig zu überwinden.

### ZUSAMMENFASSUNG DER ERFINDUNG

Aufgabe der Erfindung ist es, ein Verfahren, ein Kommunikationssystem, ein Fahrzeug und eine Steuereinheit zur anzugeben, die eine effizientere Übertragung der Bilddaten zum Teleoperated Driving ermöglichen.

Diese Aufgabe wird durch die Merkmale der unabhängigen Ansprüche gelöst. Vorteilhafte Weiterbildungen der Erfindung werden in den jeweiligen Unteransprüchen erläutert. Die Merkmale der im Folgenden beschriebenen verschiedenen Aspekte der Erfindung bzw. der verschiedenen Ausführungsbeispiele sind miteinander kombinierbar, sofern dies nicht explizit verneint ist.

Gemäß einem erst Aspekt der Erfindung ist ein Verfahren zur Optimierung der Bildübertragung bei einer Teleoperated Driving (ToD)-Anwendung angegeben, wobei Bilder der Bildübertragung von einem Fahrzeug aufgenommen werden und die Bildübertragung zwischen dem Fahrzeug und einer, insbesondere einer vom einem Fahrer gesteuerten, Steuerungseinheit über wenigstens einen Kommunikationskanal erfolgt. Die Bilddaten werden vor der Bildübertragung von einer Rechnereinheit des Fahrzeugs komprimiert. Die Steuereinheit kann die Bilddaten empfangen und für den Fahrer beispielsweise auf einem Display entsprechend aufbereiten, sodass dieser Bilder sieht, die zumindest den ähneln, die er sehen würde, wenn er direkt hinter dem Steuer sitzen würde. Dies ermöglicht es, dass der Fahrer das Fahrzeug "Fernlenken" kann, indem er die Steuereinheit entsprechend kontrolliert, also insbesondere lenkt, Gas gibt und bremst. Die Steuereinheit überträgt die entsprechenden Befehle über den Kommunikationskanal an das Fahrzeug. Eine weitere Möglichkeit ist es, dass die Steuereinheit nicht von einem Fahrer kontrolliert wird, sondern beispielsweise durch einen Server auf einer Cloud-Plattform.

Es ist nun der Kern der Erfindung, dass die Bilddaten vor der Bildübertragung von der Rechnereinheit hinsichtlich vordefinierter Bildinhalte analysiert werden und eine Selektion der Bildinhalte auf Basis der Analyse erfolgt und dass zumindest die selektierten Bildinhalte über den Kommunikationskanal vom Fahrzeug an die Steuerungseinheit übertragen werden.

Der Erfindung liegt also die Erkenntnis zugrunde, dass nicht alle Bildinhalte der Bilddaten notwendige Informationen für das Steuern des Fahrzeugs bereitstellen. Die vordefinierten Bildinhalte auf der anderen Seite stellen jedoch Informationen bereit, die für das Steuern des Fahrzeugs nützlich sind. Die Rechnereinheit erkennt diese vordefinierten Bildinhalte und selektiert sie. Indem nun die selektierten Bildinhalte über den Kommunikationskanal übertragen werden, wird vorteilhaft eine Reduktion der Datenmenge, die über den Kommunikationskanal übertragen wird, hervorgerufen wobei dennoch alle notwendigen Informationen zum Steuern des Fahrzeugs an die Steuereinheit übertragen werden. Dieses Verfahren kann einerseits ein gutes Qualitätsniveau bei vermindertem Datenvolumen sicherstellen, und andererseits kann dank verringerter Datenmenge und Latenz auch eine hohe Zuverlässigkeit gewährleisten. Dank der "gezielten" Selektion gehen auch bei stark verminderter Datenmenge keine Informationen aus den wichtigen Bildinhalten verloren. Die Selektion ermöglicht eine Vorab-Fokussierung auf die relevanten Bildinhalte bzw. Bilddaten.

Der Vorteil des erfindungsgemäßen Verfahrens ist immens: In der Praxis gibt es je nach FahrSituation unterschiedlichen Informationsbedarf. Eine ruhige Fahrt über die Landstraße bei 80km/h erfordert weniger Informations-/Datenaustauch als eine Fahrt über einen Verkehrsknotenpunkt ohne Ampeln, z.B. in Frankreich. Dank Selektion kann die Datenmenge insbesondere in den Phasen des verminderten Informationsbedarfs niedrig gehalten werden, so dass die genutzten Kommunikationsnetze nur wenig belastet werden. Ein möglicher Inputparameter für den Algorithmus, der auf der Rechnereinheit die Selektion durchführt, kann also auch die aktuelle Geschwindigkeit des Fahrzeugs sein. Insbesondere kann das Verfahren also "verletzliche" Verkehrsteilnehmer wie Fußgänger, Radfahrer besonders berücksichtigen.

Die Erfindung ermöglicht, ein großes Optimierungspotential auszuschöpfen. Es kann von einer 50%-igen Verbesserung ausgegangen werden (Qualität, Latenz, Zuverlässigkeit), insbesondere hinsichtlich ToD-Anwendungen, welche bei/mittels mehreren parallelen Datenströmen (insbesondere kontinuierliche Videobilddaten) mit jeweils z.B. 4 bis 5 Mbit/s realisiert werden. Die Dienstqualität kann spürbar verbessert werden. Nicht zuletzt können auch Kommunikationskosten gesenkt werden, insbesondere bei gleichbleibender Servicequalität und Zuverlässigkeit.

Es ist möglich den vordefinierten Bildinhalten verschiedene Prioritätsstufen zuzuordnen. Innerhalb der Selektion können somit weitere Selektionen unterschiedlicher Priorität vorgenommen werden. Die Informationen, welche für das Steuern eines Fahrzeugs am relevantesten sind, also beispielsweise andere Verkehrsteilnehmer auf der Straße, bekommen die höchste Priorität zugeordnet. Straßennamen bekommen beispielsweise eine niedrigere Priorität zugeordnet. Der Rechnereinheit kann eine aktuelle Kapazität des Kommunikationskanals bekannt gemacht werden. Reicht die Kapazität des Kommunikationskanals beispielsweise nicht aus, alle selektierten Bilddaten zu übertragen, die Selektionen mit der höchsten Priorität bevorzugt übertragen. Ist die Kapazität des Kommunikationskanals ausreichend, kann die Rechnereinheit zusätzlich zu den selektierten Bilddaten auch die nicht-selektierten Bilddaten übertragen. Hierdurch kann je nach Datenvolumen und Netzauslastung ein guter Kompromiss zwischen der Menge der übertragenen Informationen und dem Grad der Selektion erfolgen.

Durch die Selektion können den jeweiligen Bildinhalten Qualitätsmerkmale zugewiesen werden (insbesondere geringe Latenz, hohe Bandbreite). Die Selektion bzw. das Selektieren kann insbesondere auch in Abhängigkeit von der Funktion einer jeweiligen Bilderfassungseinheit (Front-oder Seitenüberwachung, Rückfahrkamera, oder dergleichen) jeweils hinsichtlich individuell vordefinierter Bildinhalte erfolgen, um (nur) basierend auf der Selektion die im Umfang verminderten Daten übertragen zu müssen. Im Allgemeinen dürfte davon auszugehen sein, dass die Bilder der Frontkamera für die Steuerung eines Fahrzeugs einen höheren Stellenwert haben als die Bilder der Rückfahrkamera. Die erfindungsgemäße Art und Weise der Selektion kann beispielsweise auch als Funktion des Fahrzustandes, insbesondere der Fahrgeschwindigkeit oder der Tageszeit, eingestellt bzw. priorisiert werden. Eine Möglichkeit ist beispielsweise Straßennamen desto höher zu bei der Selektion Priorisierung, desto niedriger die Geschwindigkeit des Fahrzeugs ist, da Fahrzeuge typischerweise nur bei reduzierter Geschwindigkeit die Richtung wechseln.

Im Gegensatz dazu erfolgte bei bisherigen standardisierten Kompressionsverfahren eine Optimierung des gesamten Videobildes hinsichtlich der unter den entsprechenden Umständen bzw. Randbedingungen erzielbaren Qualität, also in vielen Situationen auch verminderten Qualität. Bei den bisherigen Verfahren wurde also immer versucht den gesamten Informationsgehalt zu übertragen, was dann in der Folge oftmals dazu geführt hat, dass aufgrund von Kapazitätsproblemen gar keine Daten zum Steuern des Fahrzeugs übertragen wurden, wenn der Kommunikationskanal über seine Kapazitäten hinaus überlastet wurde.

Es hat sich gezeigt, dass es insbesondere im Zusammenhang mit schnellen Bewegungen (Relativgeschwindigkeiten), hohen Datenmengen und großem Gefährdungspotential von Bedeutung ist, die Datenmengen und die Latenz der Übertragung klein zu halten. Als Latenz ist dabei insbesondere die bei der Telekommunikations-Übertragung auftretende Verzögerung zu verstehen.

Das Fahrzeug erfasst die Bilddaten mittels einer oder mehrerer Bilderfassungseinheiten, insbesondere mittels Kameras, Radsensoren, Ultraschallsensoren und/oder LIDAR.

Die Bildinhalte bezeichnen Bilddaten mit bestimmten, insbesondere besonders wichtigen oder besonders interessanten Informationen. Der Begriff Bildinhalte ist in gewissem Sinne, insbesondere was die Daten als solche betrifft, synonym zum Begriff Bilddaten. Die Bilddaten können beispielsweise Videoströme rechts und links des Fahrzeugs betreffen. Die Bildübertragung wird im Folgenden auch allgemein als Übertragung bezeichnet.

Die Erfindung beruht vorzugsweise auf den drei folgenden Schritten:
- Selektion von vordefinierten/vordefinierbaren Bildinhalten;
- Kompression der selektierten Bildinhalte;
- Übertragung der selektierten Bildinhalte;
Mittels der Steuerungseinheit kann das Fahrzeug zumindest teilweise bzw. zumindest hinsichtlich einzelner Funktionen gesteuert werden, insbesondere ausschließlich basierend auf den übertragenen selektierten komprimierten Bildinhalten/Bilddaten.

Bevorzugt werden die vordefinierten Bildinhalte durch verkehrsrelevante Bildinhalte repräsentiert. Verkehrsrelevante Bildinhalte sind solche, die die Entscheidung zum Steuern des Fahrzeugs wesentlich beeinflussen. Die verkehrsrelevanten Bildinhalte können in Gruppe, insbesondere von verschiedener Priorität, unterteilt werden: Weitere (fremde) Fahrzeuge, Verkehrszeichen, Ampeln, verletzlicher Verkehrsteilnehmer (VRU), insbesondere ungeschützte Person. Dabei können je nach Anwendungsfall weitere Bildinhalte definiert werden. Wahlweise kann die Analyse hinsichtlich einer einzelnen Art dieser Bildinhalte oder hinsichtlich einer Mehrzahl dieser Bildinhalte in Kombination miteinander erfolgen, insbesondere in priorisierter Kombination. Beispielsweise wird für ein besonders großes oder schweres Fahrzeug die Priorität hinsichtlich VRU-Informationen am höchsten definiert (vornehmlich Fremdschutz für Dritte), und für ein besonders leichtes kleines Fahrzeug kann die Priorisierung z.B. abweichend davon gewählt werden (insbesondere auch hinsichtlich Eigenschutz). Gemäß einem Ausführungsbeispiel erfolgt die Selektion gestaffelt bezüglich wenigstens zweier hierarchischer Prioritätsstufen unterschiedlicher Wichtigkeit. Dies kann die Nutzung der verfügbaren Ressourcen weiter optimieren.

Dies bietet den Vorteil, dass hierdurch Kriterien bereitgestellt werden, die es dem auf der Rechnereinheit implementierten Algorithmus ermöglichen, die Bildinhalte aus den Bilddaten zu selektieren, die für das Steuern des Fahrzeugs benötigt werden.

In einer Ausführungsform des werden zusätzliche die nicht-selektierten Bildinhalte über den Kommunikationskanal übertragen, wenn der Kommunikationskanal eine ausreichende Kapazität bereitstellt.

Dies bietet den Vorteil, dass für die Steuereinheit bzw. für den Fahrer die maximale Informationsmenge bereitgestellt werden kann, aber nur für den Fall, dass nicht zu befürchten ist, dass die Kapazität des Kommunikationskanals bei dieser Übertragung überlastet wird. In diesem Sinne stellt dies eine Sicherheitskriterium dar, das den Kommunikationskanal vor einer Überlastung schützt und damit sicherstellt, dass zumindest die wichtigen selektierten Bildinhalte übertragen werden.

In einer bevorzugten Ausführungsform werden die selektierten Bildinhalte in einer höheren Bildqualität als die nicht-selektierten Bildinhalte über den Kommunikationskanal übertragen. Dies bietet den Vorteil, dass eine Datenreduktion bei der Übertragung über den Kommunikationskanal erzielt werden kann, selbst, wenn die gesamten von den Bilderfassungseinheiten bzw. der Bilderfassung Einheit aufgezeichneten Daten an die Steuereinheit übertragen werden. Diese Abstufung hinsichtlich der unterschiedlichen Bildqualitäten kann auch bei den selektierten Bildinhalten mit unterschiedlichen Prioritätsstufen angewendet werden. So können beispielsweise die Bildinhalte der Selektion mit der höchsten Prioritätsstufe mit der höchsten Bildqualität übertragen werden, die Bildinhalte der Selektion mit der niedrigsten Prioritätsstufe mit einer mittleren Bildqualität übertragen werden und die Nicht-selektierten Bildinhalte mit der niedrigsten Bildqualität übertragen werden. In diesem Zusammenhang sei erwähnt, dass die selben Prinzipien, die für die Bildqualität beschrieben werden auch für eine eventuell aufgezeichnete Audioqualität anzuwenden sind.

Vorzugsweise wird den vordefinierten Bildinhalten jeweils einer vordefinierten Qualität (Soll-Qualität) und/oder Relevanz (Wichtigkeit) zugeordnet. Dies ermöglicht eine schnelle simultane Verarbeitung bei unterschiedlichen Qualitätsmerkmalen und eine einfache Zuordnung in entsprechende Bildqualitätsstufen mit denen die vordefinierten Bildinhalte übermittelt werden sollen.

In einer bevorzugten Ausführungsform werden die selektierten Bildinhalte mit einem anderen Kompressionsverfahren als die nicht-selektierten Bildinhalte komprimiert. Das Kompressionsverfahren das auf die selektierten Bildinhalte angewendet wird reduziert die Datenmenge der selektierten Bilddaten weniger stark als das Kompressionsverfahren, das auf die Nicht-selektierten Bildinhalte angewendet wird. Diese Abstufung hinsichtlich der unterschiedlichen Kommissionsverfahren kann auch bei den selektierten Bildinhalten mit unterschiedlichen Prioritätsstufen angewendet werden. Dies bietet den Vorteil, dass die wichtigen selektierten Bildinhalte mit einer höheren Qualität übertragen werden können als die nicht-selektierten Bildinhalte. Die Steuereinheit ist eingerichtet die verschiedenen Komprimierungsverfahren zu dekodieren und dem Fahrer die Bildinhalte als für einen Menschen wahrnehmbar bzw. verständlich darzustellen, eine solche Darstellung orientiert sich zumindest für die selektierten Bildinhalte an einer realen Darstellung der Objekte. Die nicht-selektierten Bildinhalte können auf der anderen Seite beispielsweise als Vektorgrafik dargestellt werden, sodass die Datenmenge der nicht-selektierten Bildinhalte weiter reduziert wird. Eine Darstellung der nicht-selektierten Bildinhalte als Vektorgrafik kann gegebenenfalls schon eine so geringe Datenmenge aufweisen, dass in diesem Fall kein zusätzliches Kompressionsverfahren angewendet werden muss. Der Verzicht auf ein zusätzliches Kompressionsverfahren erhöht die Verarbeitungsgeschwindigkeit der Rechnereinheit und trägt zu einer Echtzeitaufbereitung der Daten bei. In anderen Worten: Die selektierten Bildinhalte können dabei als eine erste Art Bildinhalte verarbeitet werden und nicht-selektierte Bildinhalte können als eine zweite Art Bildinhalte verarbeitet werden, wobei die zweite Art Bildinhalte datenvolumenoptimiert verarbeitet wird, insbesondere indem die zweite Art Bildinhalte für eine nur schematisierte Darstellung aufbereitet bzw. transferiert wird, insbesondere als Vektorgrafik.

Bei der Selektion kann also eine Klassifizierung der Bilddaten in wenigstens zwei Gruppen unterschiedlicher Priorität vorgenommen werden, nämlich in wenigstens eine erste Gruppe selektierter Bilddaten und in wenigstens eine zweite Gruppe nicht-selektierter Bilddaten, wobei die nicht-selektierten Bilddaten der zweiten Gruppe bei der Kompression hinsichtlich Datenvolumen optimiert werden, insbesondere hinsichtlich minimalem Datenvolumen. Es hat sich gezeigt, dass eine deutliche Unterscheidung bzw. Abstufung zwischen den Qualitätsmerkmalen selektierter und nicht-selektierter Bildinhalte die Zuverlässigkeit und Qualität (insbesondere auch Informations-Aussagekraft und Belastbarkeit) der gesamten Bildübertragung deutlich steigern kann.

Die Analyse bzw. die Selektion kann dabei unter Zuhilfenahme von oder basierend auf wenigstens einem standardisierten oder vorbekannten Verfahren durchgeführt werden, insbesondere umfassend Analyseverfahren zur Kollisionserkennung oder zum Fußgängerschutz, also Verfahren, die im Zusammenhang mit der Analyse der Bilddaten hinsichtlich spezifischer Bildinhalten bzw. Bildinformation bereits in der Anwendung sind und in der Praxis erprobt sind und zuverlässig arbeiten. Dazu erforderliche bzw. dafür nutzbare Algorithmen können alternativ zu der Recheneinheit z.B. auf einem Datenträger bzw. in einem Computerprogrammprodukt hinterlegt sein, insbesondere direkt in einer/der Bildverarbeitungseinheit.

Gemäß einem Ausführungsbeispiel erfolgt die Kompression von selektierten Bildinhalten zu relativ höherer Qualität als eine/die Kompression nicht-selektierter Bildinhalte. Anders ausgedrückt: Nicht-selektierter Bildinhalte bzw. Bildinhalte mit relativ niedrigeren Qualitätsmerkmalen können stärker komprimiert werden. Dies ermöglicht nicht zuletzt einen guten Kompromiss aus Datenvolumen und Qualitätseinbußen.

Gemäß einem Ausführungsbeispiel erfolgt die Kompression von selektierten Bildinhalten derart, dass die Daten mit geringerer Latenz übertragbar sind. Dies begünstigt eine Echtzeitverarbeitung der Daten in der Steuereinheit durch eine Minimierung der Übertragungszeit. Auf sich ändernde Verkehrsbedingungen kann also möglichst schnell reagiert werden.

Vorzugsweise nutzt der Kommunikationskanal zur Bildübertragung den 5G-Mobilfunkstandard. Der 5G-Mobilfunkstandard bietet für das Teleoperated Driving viele Vorteile. Zum einen können Ressourcen der entsprechenden Slices des 5G-Mobilfunkstandard passgenau auf die Anforderungen des Teleoperated Driving angepasst werden, zum anderen ermöglicht der 5G-Mobilfunkstandard geringe Latenzzeiten bei der Übertragung, sodass eine Echtzeit Verarbeitung der Daten der Steuereinheit ermöglicht wird.

Gemäß einem Ausführungsbeispiel erfolgt die Übertragung zumindest der selektierten Bildinhalte gemäß 5G QoS (bzw. 5G Quality of Service-Verfahren). Es hat sich gezeigt, dass sich die erfindungsgemäßen Vorteile in dieser Art von Kommunikationsnetzwerk besonders spürbar verwirklichen lassen.

Gemäß einem Ausführungsbeispiel erfolgt die selektive Verarbeitung und Übertragung selektierter Bildinhalte parallel zu der Verarbeitung und Übertragung nicht-selektierter Bildinhalte. Dies bietet den Vorteil, dass die Verzögerung zwischen dem Empfang der Bilddaten durch die Kameras und Bildübertragung an die Steuereinheit reduziert wird.

Gemäß einem zweiten Aspekt der Erfindung ist ein Fahrzeug für Teleoperated Driving-Anwendungen angegeben, wobei das Fahrzeug zur Durchführung eines der vorstehend beschriebenen Verfahren ausgebildet ist. Das Fahrzeug umfasst:
eine Bilderfassungseinheit zum Aufzeichnen von Bilddaten einer Umgebung des Fahrzeugs;
eine Fahrzeug-Kommunikationsschnittstelle eingerichtet zum Aufbau eines Kommunikationskanals, wobei das Fahrzeug ausgebildet ist um über den Kommunikationskanal Steuerbefehle zu erhalten und die Bilddaten zu versenden;
ein Fahrzeugsteuersystem zum Ausführen der erhaltenden Steuerbefehle;
eine Rechnereinheit, wobei die Rechnereinheit ausgebildet ist die Bilddaten vor dem versenden zu komprimieren,
Erfindungsgemäß ist die Rechnereinheit eingerichtet die Bilddaten vor der Bildübertragung hinsichtlich vordefinierter Bildinhalte zu analysieren und eine Selektion der Bildinhalte auf Basis der Analyse erfolgt.

Die bietet den Vorteil, dass das Fahrzeug wichtige Bilddaten, die zu seiner Fernsteuerung notwendig sind aus den gesamten Bilddaten extrahieren kann, was zu einer Reduktion der zu versendenden Datenmenge führt. Die Gefahr, dass der Kommunikationskanal durch eine zu große Datenmenge überlastet werden könnte, wird hierdurch effektiv verringert. Insbesondere lassen sich zuvor weiter oben beschriebene Vorteile realisieren.

Für das Selektieren und Komprimieren können optional bereits verfügbare Selektions-und/oder Kompressionsmodule in die Rechnereinheit integriert sein. Insbesondere kann die Rechnereinheit als eine Bildverarbeitungseinheit vorgesehen sein. Für die Übertragung können optional bereits verfügbare Kommunikationsmodule in die Fahrzeug-Kommunikationsschnittstelle integriert sein.

Gemäß einem dritten Aspekt der Erfindung ist eine Steuerungseinheit für Teleoperated Driving-Anwendungen angegeben. Die Steuereinheit ist zur Verwendung nach einem der vorstehend beschriebenen Verfahren ausgebildet. Die Steuereinheit umfasst:
einen Prozessor zum Ausführen von Rechenoperationen;
eine Steuereinheit-Kommunikationsschnittstelle eingerichtet zum Aufbau eines Kommunikationskanals zu einem Fahrzeug, wobei die Steuerungseinheit über den Kommunikationskanal von dem Fahrzeug aufgezeichnete Bilddaten empfängt und der Prozessor und/oder ein entfernter Fahrer die Bilddaten zu den Steuerbefehlen für das Fahrzeug verarbeitet, wobei die Steuerbefehle über den Kommunikationskanal an das Fahrzeug gesendet werden. Der Prozessor ist eingerichtet, die Bilddaten, die nach einem der vorstehend beschrieben Verfahren selektiert sind, zu verarbeiten.

Durch die Steuereinheit lassen sich insbesondere die zuvor weiter oben beschriebenen Vorteile realisieren. Der Prozessor der Steuereinheit kann die Bilddaten selbstständig zu Steuerbefehlen für das Fahrzeug verarbeiten. Das würde dem Fall des autonomen Verfahrens entsprechen. Es besteht aber auch die Möglichkeit, dass der Prozessor die Bilddaten so verarbeitet, insbesondere dekomprimiert, dass die Bilddaten auf einem Display für den entfernten Fahrer dargestellt werden können. Dieser kann beispielsweise in einer funktionellen Nachbildung eines Fahrerbereiches eines Autos sitzen, wobei die funktionelle Nachbildung zumindest ein von dem Fahrer bedienbares Lenkrad, Gas- und Bremspedal, Blinker und dergleichen umfasst. Die Steuerbefehle, die der Fahrer an der funktionellen Nachbildung des Fahrerbereiches tätigt, werden von der Steuereinheit erfasst und an das Fahrzeug als auszuführende Steuerbefehle über den Kommunikationskanal gesendet. Dies bietet den Vorteil, dass der entfernte Fahrer das Fahrzeug effizient fernsteuern kann.

Die zuvor genannte Aufgabe wird auch gelöst durch ein Computerprogrammprodukt gemäß dem entsprechenden nebengeordneten Anspruch, nämlich durch ein Computerprogrammprodukt eingerichtet zum Ausführen eines zuvor beschriebenen Verfahrens, wenn das Verfahren auf wenigstens einem Computer ausgeführt wird. Hierdurch lassen sich zuvor weiter oben beschriebene Vorteile realisieren.

Ein Datenträger mit einem solchen darauf hinterlegtem Computerprogrammprodukt kann für die ToD-Anwendungen bereitgestellt werden.

### KURZE BESCHREIBUNG DER FIGUREN

In der nachfolgenden Zeichnungsfigur wird die Erfindung weiter beschrieben. Es zeigt:

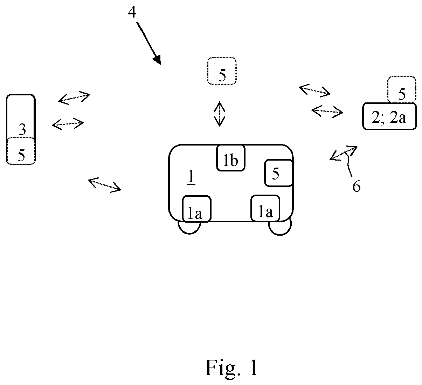

- **Figur 1**: in schematischer Darstellung eine Anordnung gemäß einem Ausführungsbeispiel;

### DETAILLIERTE BESCHREIBUNG DER FIGUREN

In Fig. 1 ist ein Fahrzeug 1 gezeigt, in welchem wenigstens eine Bilderfassungseinheit 1a und wenigstens eineBildübertragungseinheit 1b installiert sind, wobei die Bildübertragungseinheit 1b eingerichtet ist zur drahtlosen Übertragung von Bilddaten zu einem entfernten Fahrer (remote) 2 bzw. zu einer/dessen Steuerungseinheit 2a, und/oder wahlweise auch zu einer ToD-Station 3, insbesondere jeweils über einen Kommunikationskanal 6. Auch die ToD-Station 3 kann mit der Steuerungseinheit 2a kommunizieren. Dieses über die Kommunikationskanäle 6 aufgebaute und im Wesentlichen die Bildübertragungseinheit 1b und eine oder mehrere Bildverarbeitungseinheiten 5 aufweisende Teleoperated Driving-System 4 ermöglicht dank Analyse und Selektion von Bilddaten hinsichtlich vordefinierter/vordefinierbarer Bildinhalte, dank selektiver Kompression selektierter Bildinhalte und dank selektiver Übertragung selektierter komprimierter Bildinhalte über den oder die Kommunikationskanäle 6 einen effizienten, zuverlässigen und qualitativ hochwertigen Daten-/Informationsaustausch bei minimierter Verzögerung, insbesondere unter Nutzung von aktuell verfügbaren Kommunikationsnetzen bzw. Kommunikationsstandards wie z.B. 5G. Optionale Anordnungen von der/den Bildverarbeitungseinheit(en) 5 sind durch Strichlinien angedeutet.

### Bezugszeichenliste

- 1: Fahrzeug
- 1a: Bilderfassungseinheit
- 1b: Bildübertragungseinheit
- 2: entfernter Fahrer (remote)
- 2a: Kommunikations-/Steuerungseinheit
- 3: ToD-Station
- 4: Teleoperated Driving-System
- 5: Bildverarbeitungseinheit
- 6: Kommunikationskanal

## Patentansprüche

1. Verfahren zur Optimierung der Bildübertragung bei einer Teleoperated Driving (ToD)-Anwendung, wobei Bilder der Bildübertragung von einem Fahrzeug (1) aufgenommen werden und die Bildübertragung zwischen dem Fahrzeug (1) und einer, insbesondere einer vom einem Fahrer gesteuerten, Steuerungseinheit (2a) über wenigstens einen Kommunikationskanal (6) erfolgt, wobei Bilddaten vor der Bildübertragung von einer Rechnereinheit des Fahrzeugs (1) komprimiert werden;
**dadurch gekennzeichnet,**
**dass** die Bilddaten vor der Bildübertragung hinsichtlich vordefinierter Bildinhalte von der Rechnereinheit analysiert werden und eine Selektion der Bildinhalte auf Basis der Analyse erfolgt
und **dass** zumindest die selektierten Bildinhalte über den Kommunikationskanal (6) vom Fahrzeug (1) an die Steuerungseinheit (2a) übertragen werden.

2. Verfahren nach Anspruch 1, **dadurch gekennzeichnet, dass** die vordefinierten Bildinhalte verkehrsrelevante Bildinhalte repräsentieren.

3. Verfahren nach einem der vorhergehenden Ansprüche, **dadurch gekennzeichnet, dass** zusätzliche die nicht-selektierten Bildinhalte über den Kommunikationskanal (6) übertragen werden, wenn der Kommunikationskanal (6) eine ausreichende Kapazität bereitstellt.

4. Verfahren nach Anspruch 3, **dadurch gekennzeichnet, dass** die selektierten Bildinhalte in einer höheren Bildqualität als die nicht-selektierten Bildinhalte über den Kommunikationskanal (6) übertragen werden.

5. Verfahren nach einem der Ansprüche 3 bis 4, **dadurch gekennzeichnet** die selektierten Bildinhalte mit einem anderen Kompressionsverfahren als die nicht-selektierten Bildinhalte komprimiert werden.

6. Verfahren nach einem der vorhergehenden Ansprüche, **dadurch gekennzeichnet, dass** der Kommunikationskanal zur Bildübertragung den 5G-Mobilfunkstandard nutzt.

7. Fahrzeug vorgesehen für Teleoperated Driving-Anwendungen und eingerichtet zur Durchführung eines der vorstehend beschriebenen Verfahren umfassend:
eine Bilderfassungseinheit zum Aufzeichnen von Bilddaten einer Umgebung des Fahrzeugs;
eine Fahrzeug-Kommunikationsschnittstelle eingerichtet zum Aufbau eines Kommunikationskanals, wobei das Fahrzeug ausgebildet ist um über den Kommunikationskanal Steuerbefehle zu erhalten und die Bilddaten zu versenden;
ein Fahrzeugsteuersystem zum Ausführen der erhaltenden Steuerbefehle;
eine Rechnereinheit, wobei die Rechnereinheit ausgebildet ist die Bilddaten
vor dem versenden zu komprimieren,
**dadurch gekennzeichnet,**
**dass** die Rechnereinheit eingerichtet ist die Bilddaten vor der Bildübertragung hinsichtlich vordefinierter Bildinhalte zu analysieren und eine Selektion der Bildinhalte auf Basis der Analyse erfolgt.

8. Steuerungseinheit vorgesehen für Teleoperated Driving-Anwendungen und eingerichtet zur Verwendung in einem der vorstehend beschriebenen Verfahren umfassend:
einen Prozessor zum Ausführen von Rechenoperationen;
eine Steuereinheit-Kommunikationsschnittstelle eingerichtet zum Aufbau eines Kommunikationskanals zu einem Fahrzeug, wobei die Steuerungseinheit über den Kommunikationskanal von dem Fahrzeug aufgezeichnete Bilddaten empfängt und der Prozessor und/oder ein entfernter Fahrer die Bilddaten zu den Steuerbefehlen für das Fahrzeug verarbeitet, wobei die Steuerbefehle über den Kommunikationskanal an das Fahrzeug gesendet werden,
**dadurch gekennzeichnet,**
**dass** der Prozessor eingerichtet ist, die Bilddaten, die nach einem der vorstehend beschrieben Verfahren selektiert sind, zu verarbeiten.

9. Teleoperated Driving-System umfassend
ein Fahrzeug nach Anspruch 7 und
eine Steuereinheit nach Anspruch 9.

10. Computerprogrammprodukt eingerichtet zum Ausführen eines Verfahrens nach einem der vorhergehenden Verfahrensansprüche, wenn das Verfahren auf einem Computer ausgeführt wird.
